# EUROPEAN PATENT APPLICATION

(11) **EP 4 682 854 A1**
(43) Date of publication of application: **21.01.2026**
(21) Application number: 25155065.3
(22) Date of filing: 30.01.2025
(51) Int. Cl.: G08G 5/22, G08G 5/30, G08G 5/90, G08G 5/32, G08G 5/34

(54) **CONFIRMING A PLANNED ROUTE**

(30) Priority: 17.07.2024 GB 202410425
(71) Applicant: SITA Switzerland Sàrl, 1216 Cointrin Geneva (CH)
(72) Inventor: Bart, Arnaud, 1216 Cointrin (CH); Favennec, Romain, 1216 Cointrin (CH); Gallen, Jordan, Letterkenny (IE)
(74) Representative: Reddie & Grose LLP

(57) **Abstract**

The invention relates to a method and system for planning a route between an origin and designation through a plurality of regions. The method may involve transmitting prebooking information to an origin location operator, a destination location operator, and at least one route corridor operator, and receiving messages from each of these operators to determine whether a proposed route is available and allowable.

## Description

### FIELD OF THE INVENTION

This invention relates to a route planning system for providing a route planning system for a vehicle or transportation means, and a related method. The invention may also relate to a database system. More particularly, this invention relates to systems relating to planning a route for a drone, eVTOL, or other manned or unmanned aerial vehicle from an origin to a destination.

### BACKGROUND OF THE INVENTION

When attempting to plan and/or book a flight, there are numerous different entities which need to interact and exchange data amongst themselves.

For example, when attempting to book a flight between two vertiports A and B, the entities involved in such a process may include: the passenger wishing to take the flight, the operator of the eVTOL / vehicle to carry the passenger, the operators of vertiports A and B, one or more operators of route corridors (i.e. paths or routes along which a vehicle is allowed or may be granted permission to travel along between an origin and destination), an authority which provides weather information regarding the suitability of the proposed vehicle route, amongst others.

Interactions and data exchanges between such systems and operators may be needed to book a flight. For example, a passenger may need to provide information such as the locations they want to travel between to the vehicle operator; the vertiport / route corridor operators may require origin, travel, and arrival times to see if they have capacity for the proposed flight; the vehicle operator may require information regarding the weather on the proposed route to determine if the vehicle will be able to fly in the expected weather.

It is therefore a necessity in modern aviation that the various entities / operators be able to communicate and exchange data to allow for flights to be booked to avoid delays, ensure there are sufficient resources available, and avoid accidental overlap of flights.

In particular with the rise of eVTOL (electric vertical take-off and landing) vehicles, drones, and other unmanned aerial vehicles, it is expected that the number of flights within and between cities will grow enormously in the coming years.

There is therefore a need to ensure that legacy systems already in place at existing airports / vertiports, and the latest systems provided at newer airports / vertiports, can communicate and exchange data effectively, and to maximise the efficiency from these existing systems to cope with the growing number of flights.

Additionally, it is further seen that the provision of a centralised database able to hold and provide data from multiple of the above referenced entities could be further advantageous for improving the efficiency of data exchange.

### SUMMARY OF THE INVENTION

There is provided a system for booking a planned route between an origin and a destination for an article, comprising: a processor configured to cause the system to: transmit prebooking information to an origin location operator, a destination location operator, and at least one route corridor operator, each operator being responsible for a portion of the planned route, and wherein the prebooking information comprises information relating to the planned route between the origin and the destination; receive a message from each of the origin location operator, the destination location operator, and the at least one route corridor operator, wherein each message from each operator confirms or rejects whether the corresponding operator is able to accommodate the portion of the planned route that the corresponding operator is responsible for; and if the message received from each operator is a confirmation that the corresponding operator is able to accommodate the portion of the planned route that the corresponding operator is responsible for, transmit a confirmation message to book the planned route, wherein the confirmation message is transmitted to the origin location operator, the destination location operator, and the at least one route corridor operator. By providing a system for booking a planned route, there is provided an easy method for exchanging data between the various parties (e.g. the origin location operator, the destination location operator, and at least one route corridor operator). In order to book a flight, all of these entities need to be contacted to ensure they have the capacity at the required location and time to accommodate the planned flight.

The provision of this system, also called the event broker, allows for the required data exchange to occur. The system may beneficially exchange data directly with each of the destination, origin, and route corridor operators. Instead of requiring each of these operators to exchange data between themselves (which could be complicated or impossible if two of the operators use very different hardware) the operators only need to be compatible with the event broker system. This makes it easier for different legacy systems to be combined in a way which still allows for flight paths to be booked.

The system may further comprise having transmitting the prebooking information comprises transmitting: a request to take-off from a runway, helipad, or landing zone at the origin location; a request to land at a runway, helipad, or landing zone at the destination location; a request to travel through an airway; or when the article is vehicle, the particular mode of transport or vehicle type of the vehicle.

The system of the invention is seen as particularly advantageous when applied to aircraft such as eVTOL, and when applied to planning a route between two vertiports. A particular problem is that of ensuring that all operators within a system have the ability to effectively exchange data in order for a flight to be booked (e.g. if legacy systems are trying to interact with modern systems). The present system allows for this data to be easily exchanged via the event broker system.

The system may further comprise having transmitting the prebooking information comprises transmitting: a departure time for the origin location; an arrival time for the destination location; or an arrival and departure time from at least one route corridor.

Advantageously, the prebooking request may contain this information in order to allow for the planned route to be booked. In order for an operator to know whether it has the necessary resources to accommodate the planned route, it must know what time the vehicle needs the resources.

The system may further comprise a storage means, and the system is configured to store the prebooking request in the storage means.

Logging the request in a database system may be advantageous. If the database is a common database, i.e. readable and accessible by other entities involved in booking routes, this may allow other entities to see the prebooking request and avoid them attempting to book an overlapping route. This can help to reduce data transfer by reducing the number of unallowable prebooking requests being filed.

The system may further comprise having a processor assign the prebooking request with a unique ID which is configured to be used in transactions with the system to identify the prebooking request.

Assigning the request a unique ID may advantageously allow the request to be uniquely identified. This can provide a method for entities or operators to view or make changes to the prebooking request at a later date by using the ID to identify the request.

The system may be further configured to receive modifying information, the modifying information relating to modifying or cancelling the planned route from one of the operators or a user after the route has been confirmed; store the modifying information on the storage system; transmit a message to the remaining operators or user to inform the remaining operators that the route has been modified or cancelled.

Alerting the operators when a modification has been made to the prebooking request is further advantageous, as this ensures that operators have up to date information. This can reduce the potential of operators refusing subsequent requests on the basis of a prebooking request which has actually already been cancelled.

The system may further comprise having the origin location operator, upon receiving the prebooking information, is configured to determine whether the origin location has the resources available required to accommodate the planned route using origin location resource information accessed from a storage system.

A destination or origin operator may obtain the information regarding available resources from a database. This database may be a local database, in which case data transmission and recall times can be reduced. Alternatively, the database may be a central shared database (such as a VODB) which may allow the operator to access more accurate, up to date information. These tasks may be performed by a resource management system at either of the origin or destination locations.

The system may further be configured to determine if the operator can accommodate the planned route, in which the system is configured to determine any one or more of whether: the origin or destination location has an available runway or landing pad; the origin or destination location has sufficient ground crew to unload the vehicle; and where the article is a vehicle, the origin or destination location has an available terminal for vehicle passengers to disembark.

When booking a flight, it may be particularly advantageous to check for available runways or landing pads to allow the aerial vehicle to arrive at / leave the given location. Additionally, the availability of ground crews and terminals may further limit whether a vehicle can arrive at or depart a given location.

The operator of a route corridor may perform similar resource availability checks as the operators described above. The operator may check for vehicle type or cargo, as the route corridor may have certain restrictions placed on it. For example, if the route corridor passes over a residential area, the route corridor may have restrictions on dangerous chemicals, or overly large / loud vehicles, from passing over it.

The system may further be configured to determine whether any one of the origin location operator, the destination location operator, and the at least one route corridor operator can accommodate the planned route, the operator is configured to use the system to access information from a single storage system shared between at least some of the operators and containing information relating to at least two of the origin location, destination location, and route corridor.

Accessing a shared database, such as a VODB, can beneficially allow for an operator to access more up to date information more quickly, and avoid the need for operators to contact other operators individually to obtain information, thereby also reducing the amount of data used.

In response to the system sending a confirmation notification to the article operator, the article operator may further be configured to send a notification that the route is available to the user.

The object operator may send confirmation to the user that the planned route is available. Optionally, this may be sent to the user for confirmation, possibly alongside a price. This allows the user to confirm they wish to take the route (e.g. travel on the selected vehicle route) and pay the price required by the vehicle operator. Booking may be performed by the user on a mobile application. This may beneficially allow the user to be contacted more easily at any time, meaning they can confirm the route as soon as they receive the notification.

There may be provided a computer device, comprising: a storage device for storing a data set comprising a plurality of data elements; a processor configured to cause the device to: receive data stored within a plurality of storage systems, each storage system comprising at least one data element of the plurality of data elements, each storage system configured to store information comprising an origin location, a destination location, or at least one route corridor; and
update the storage device to store further data defining the availability of the origin location, the destination location, and the at least one route corridor.

There may be provided a computer device, comprising: a storage device for storing a first data set comprising a plurality of data elements, the data elements defining the availability of an origin location, a destination location, and at least one route corridor; a processor configured to cause the device to: receive a second data set from at least one of an operator of the origin location, the destination location, or at least one route corridor, wherein the second data set comprises updated information comprising the resources available at the origin location, the destination location, or at least one route corridor to accommodate an article; store the second data set within the storage device; and transmit the second data set to an article operator which is configured to control the movement of the article in response to receiving a request from a user book a planned route.

There may be provided a method for booking a planned route between two locations, the method comprising: transmitting prebooking information to an origin location operator, a destination location operator, and at least one route corridor operator, each operator being responsible for a portion of the planned route, and wherein the prebooking information comprises information relating to the planned route between the origin and the destination; receiving a message from each of the origin location operator, the destination location operator, and the at least one route corridor operator, wherein each message from each operator confirms or rejects whether the corresponding operator is able to accommodate the portion of the planned route that the corresponding operator is responsible for; and if the message received from each operator is a confirmation that the corresponding operator is able to accommodate the portion of the planned route that the corresponding operator is responsible for, transmitting a confirmation message to book the planned route, wherein the confirmation message is transmitted to the origin location operator, the destination location operator, and the at least one route corridor operator.

Still other aspects, embodiments, and advantages of these exemplary aspects and embodiments are discussed in detail below. Embodiments disclosed herein may be combined with other embodiments in any manner consistent with at least one of the principles disclosed herein, and references to "an embodiment," "some embodiments," "an alternate embodiment," "various embodiments," "one embodiment" or the like are not necessarily mutually exclusive and are intended to indicate that a particular feature, structure, or characteristic described may be included in at least one embodiment. The appearances of such terms herein are not necessarily all referring to the same embodiment.

### BRIEF DESCRIPTION OF THE DRAWINGS

The following description is made with reference to aerial vehicles such as eVTOL or drones by way of example only. However, embodiments of the invention may advantageously be used by any aerial vehicle including and not limited to fixed wing aircraft, non-fixed wing aircraft, such as helicopters, hovercraft and so on. Further, embodiments of the invention may be used in other travel industries, such as rail, coach, car, or indeed in any environment where travel between an origin and destination is restricted in terms of the route or space through which the vehicle is allowed to pass.

Alternatively, the invention may be used for the transport of luggage, packages, or other items.

The following embodiments described may be implemented using a C++ programming language using for example an OpenCV library. However, this is exemplary and other programming languages known to the skilled person may be used such as JAVA, and .xml.

In order to best describe the manner in which the above-described embodiments are implemented, as well as define other advantages and features of the disclosure, an exemplary detailed description is provided below and is illustrated in the appended drawings. Understanding that these drawings depict only exemplary embodiments of the invention and are not therefore to be considered to be limiting in scope, the examples will be described and explained with additional specificity and detail through the use of the accompanying drawings in which:

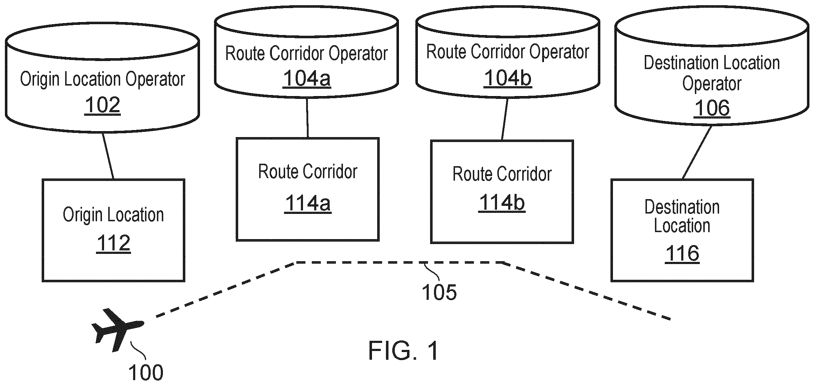

Figure 1 shows a schematic illustration of various regions which may segment an area. In one embodiment, these regions may represent a mixture of vertiports / airports and airspaces;
Figure 2 shows a schematic illustration of various entities that may communicate through an event broker system 300;
Figures 3, 4, and 5 show flow charts involving method steps which may be performed when booking a flight plan using the system shown in figure 2.
Figure 6 shows an example of code which may be included within a prebooking request.

### DETAILED DESCRIPTION

Various embodiments of the disclosed methods and arrangements are discussed in detail below. While specific implementations are discussed, it should be understood that this is done for illustration purposes only. A person skilled in the relevant art will recognize that other components, configurations, and steps may be used without parting from the scope of the disclosure.

An area may be split up into one or more regions. These regions may be controlled and operated by an operator. The operator may have the authority to determine who can enter and use the region at a given time.

In one embodiment, these regions may correspond to one or more airspaces or route corridors 114a, 114b, a origin location 112, and a destination location 116.

The shape of a route corridor may be defined as a three dimensional shape. This shape could be described by a surface and a corresponding altitude range. For example, the shape of the route corridor could correspond to a circle, with an altitude range between ground level and 1000 meters. However, the surface need not be limited to a circle, and may correspond to any regular or irregular shape.

A route corridor may be defined as a 3D volume of airspace which a vehicle (e.g. an airplane, drone, or eVTOL) may pass through. These route corridors may be controlled by corresponding route corridor operators 104a, 104b, which may grant or withhold permission for a vehicle to pass through the route corridor.

There may be a number of reasons for an entity to claim a route corridor. For example, it can be a way to control the traffic of flying objects like drones over a dense area. This could also limit the type of operations vehicle may perform within the route corridor, for example not allowing vehicles to carry passengers under a certain altitude.

The controlling operator for a route corridor may be any eligible entity, for example an entity which can be directly impacted by any flying objects entering its direct airspace. An example of an eligible entity could be an airport within a region. Alternatively, the controlling operator may be a single central operator of all route corridors within a given area (i.e. operators 104a and 104b may in fact be a single entity which controls access to both of route corridors 114a and 114b).

These operators 104a and 104b may allow or reject a vehicle from passing through the route corridor based on factors such as the vehicle type, cargo carried by the vehicle, the noise generated by the vehicle when travelling, the proposed flight time, or more.

Operators of air corridors passing over high population density regions may have stricter limits compared to operators of air corridors passing over low population density regions.

A set of rules for residential area with high density may for example:
- Limit the type of vehicle
- Prevent vehicle travel out of business hours
- Prevent vehicle travel below this within certain areas of the region, e.g. prevent flight below a certain altitude
- Request unmanned vehicles to provide some certifications

Whereas a set of rules for residential area with low density may
- Allow vehicle travel anytime
- Allow any type of vehicle
- Allow vehicle travel only between two waypoints

Origin location 112 and destination location 116 may be the start and end points of a vehicle journey, respectively. For example, these locations may be airports, vertiports, or helipads from which an aerial vehicle operator 100 may take off from or land at.

Whilst this specific example discusses the use of an aerial vehicle, it is considered that any article could be used in place in the claimed invention. An article may include both vehicles and objects.

A vehicle is considered to be any thing used for transporting people or goods. Examples of vehicles could include:
- Car
- Bus
- Truck or Lorry
- Airplane
- Helicopter
- VTOL or eVTOL, (electrical) vertical take-off and landing vehicles able to take off without travelling horizontally along a runway before take-off
- Drone

An object could be any thing. Preferred examples of objects falling within the scope of the invention include:
- Letters
- Parcels
- Luggage

These locations may be operated and controlled by Origin Location Operator 102 and Destination Location Operator 106. These locations may determine what vehicle may take off from / land at this location at a given time. The operator may allow or reject a request from a vehicle take off from / land at the location based on the availability of landing spaces, the availability of ground crew to load or unload the vehicle, or more.

When a vehicle 100 wishes to fly a route from origin location 112 to destination location 116, the vehicle operator may first determine a route 105 to take. The vehicle operator determines which origin location, route corridor(s), and destination location the route 105 passes through, and may contact the respective operators 102, 104a and b, 106 to request permission to fly the vehicle along the proposed route. The operators review the request received from the vehicle operator, and either accept or decline access to the location or route corridor they control, before sending a response back to the vehicle operator. If the vehicle operator receives acceptances from all of the operators responsible for a given route, then the route is approved. The vehicle may optionally contact each of the operators again to submit confirmation of the route. If one or more of the operators reject the route, then the vehicle operator may cancel the route request and select an alternative route.

A route request sent to an operator may include information such a flight number, the vehicle type, the number of passenger, the departing vertiport / arrival vertiport, as well as the planned timestamps of the different phase of the flight.

Article operator 100 - which may be a vehicle operators - is an operator configured to control the movement of the article. The article operator may correspond to an airline responsible for controlling the movement of a plane or other aerial vehicle, or may be responsible for controlling the movement of baggage through an airport (e.g. between check in desks and the airplane).

Alternatively, the article operator may be a logistics company of postage company responsible for controlling the movement of a letter, parcel, or package.

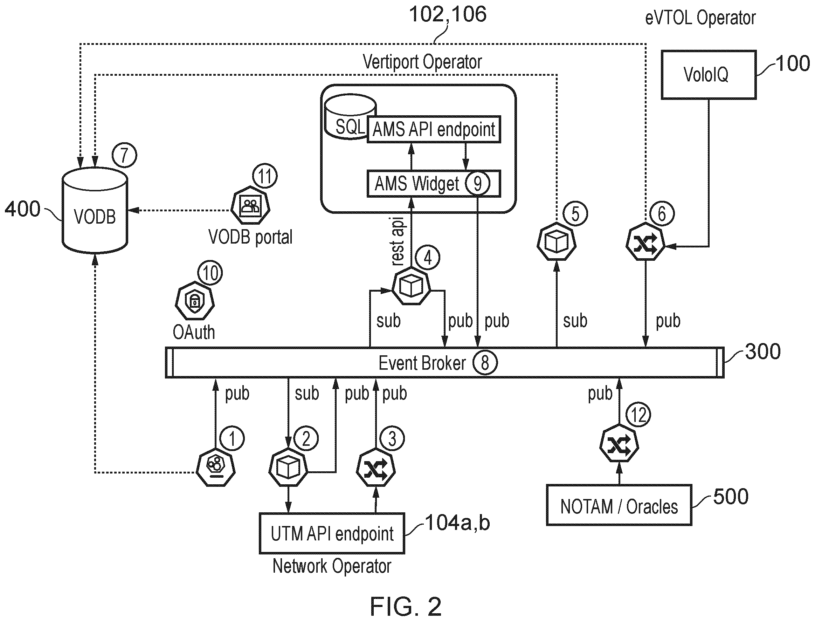

Figure 2 shows an example of a system which may exchange date with the vehicle operator 100 and the operators 102, 104a and b, and 106. Rather than the vehicle operator and location / route corridor operators exchanging data directly when attempting to book a route 105, instead the event broker system 300 may act as an intermediary entity between these entities. For example, instead of the vehicle operator 100 sending a flight path request to a vertiport operator 102, instead the vehicle operator 100 may send a flight path request to the event broker 300, and the event broker 300 may send flight path request to the vertiport operator 102.

This event broker system may include one or more of a processor, a storage device, and a means for communication with the various operators (e.g. via an internet connection). The event broker may be used as a system for booking a planned route between an origin and a destination for an article. Specifically, the event broker system may be used as a reservation system. The event broker system may be used when reserving a flight path.

The event broker system 300 may be able to interact and exchange data with a number of entities, such as origin and destination operators 102, 106 (e.g. vertiport operators), route corridor operators 104a, 104b (e.g. an urban traffic management operator or air traffic controller), a vehicle operator 100 (e.g. an eVTOL or drone operator), or a NOTAM system 500 (a NOTAM being a notice alerting aircraft pilots of potential hazards along a flight route or at a particular location).

A NOTAM system may provide information such as:
- Weather conditions
- hazards, including air shows, parachute jumps, kite flying, lasers, rocket launches, etc.
- flights by important people such as heads of state (which sometimes involve temporary flight restrictions, TFRs)
- closed runways
- inoperable radio navigational aids
- military exercises with resulting airspace restrictions
- inoperable lights on tall obstructions
- temporary erection of obstacles near airfields (e.g., cranes)
- passage of flocks of birds through airspace
- notifications of runway/taxiway/apron status concerning snow, ice, and standing water
- notification of an operationally significant change in volcanic ash or other dust contamination
- software code risk announcements with associated patches to reduce specific vulnerabilities

The event broker system may also interact with a database system such as a Vertiport Operational Data Base (VODB) 400. The VODB is a shared database system which any of the above entities may access and publish information to via the event broker system 300. The VODB may act as a common source of up to date information amongst the entities, to ensure the entities have access to all of the same information when booking a flight. One way the VODB system differs from typical database systems used in legacy airport systems is that the VODB is shared amongst these entities - for example the resources available at Heathrow and Gatwick and London City airports are typically stored in local databases at each of these airports, instead of a single database or VODB. Each entity may publish information onto the VODB through standard API integration through the event broker. The use of such a database system beneficially allows the vehicle operator to have access to information from a plurality of operators in a single location.

The event broker and VODB systems may be placed within the same region, or in the same location. However, this is not needed, and the event broker and VODB can still function if placed in separate locations.

The database system may hold information relating to various operators and entities, which may be accessed via API's. This may allow anyone, or certain selected operators involved in vehicle route booking, to view :
- The existing vertiports of an area, e.g. the locations of all the airports or vertiports in Rome
- A description of each airport or vertiport's features (e.g. the number of gates or landing strips, typical passenger numbers in a day, nearby transport links)
- The availabilities of the vertiport from a flight perspective - for example the available free slot times for a vehicle to land and take-off

An example of a booking procedure is provided here. Initially, a user (for example, a prospective passenger wishing to book a flight) may contact a vehicle operator 100 (for example an airline) with a flight request. The flight request may include information such as a preferred origin and destination location (e.g. vertiports) as well as a preferred origin and/or arrival time.

The vehicle operator 100 may receive this request and perform internal checks to check whether there are any available vehicles which may fulfil this flight request. If there is not, the vehicle operator may send a rejection notification to the user informing them that no vehicles are available to fulfil the flight request.

If vehicles are available, the vehicle operator may send a pre-booking request to the VODB 400, logged as a "Pre-booking request". The vertiport operator may exchange this information using an API, and may log this information with the VODB directly, or may provide the information to the event broker 300 which provides this information to the VODB 400.

The Pre-booking request may comprise prebooking information, which may comprise all necessary information required by the various operators for a flight to be booked. This prebooking information may be stored in the pre-booking request as alphanumeric information which can be extracted. This information may include the desired origin location or vertiport, arrival location or vertiport, origin and/or arrival time, vehicle type, ground resources needed at each vertiport to perform the flight, the Air traffic corridor(s) that will be used for the flight.

Information contained within the pre-booking request may then be provided from the VODB via the event broker to one or more of the origin location operator 102, route corridor operators 104a, 104b, and destination location operator 106.

Whilst the entire pre-booking flight request may be provided to each of these operators, to reduce unnecessary data transmission the event broker may instead only provide the necessary information to each operator to book the request. For example the origin location operator may only need information such as the origin time, vehicle type, resources needed at origin location 112, and not need to be provided information such as the arrival time at destination location 116.

Each of the origin location operator 102, route corridor operators 104a, 104b, and destination location operator 106 may receive a pre-booking request and perform internal checks to determine whether they can accommodate the pre-booked flight. For example, the origin and destination operators may check the availability of take off / landing zones at the requested times, resources for loading / unloading the vehicle, etc. The route corridor operators may check whether the vehicle / cargo are allowed to pass through the route corridor, whether the route corridor is already fully booked at the required time, etc. The operators may obtain this information from local databases or from the VODB.

Having performed these checks, the operators may individually send back either a rejection notification (if they cannot accommodate the planned route) or an acceptance notification (if they can accommodate the planned route) to the VODB via the event broker. If the VODB receives one or more rejection notifications, the pre-booked flight is rejected, and notice of this rejection is sent to the vehicle operator and user. The vehicle operator and user may then have the option to alter or send a new pre-booking request to attempt to book a route.

If the VODB receives all acceptance notifications from the operators, the VODB may move the planned route from being logged as a "Pre-booking request" to a "Confirmed booking Request". This may be done by the VODB automatically upon receiving the final acceptance notification, or alternatively may be performed after a notification from the vertiport operator and user confirming they wish to finalise booking of the flight. For example, the VODB may send a notification to the vehicle operator 100 informing them that all operators 102, 104a, 104b, 106 have provisionally accepted the pre-booking request, and request final confirmation of acceptance. The vehicle operator may request final confirmation from the user to accept the planned route (which may be provided alongside a value associated with the user booking the route, such as a price for the user to take the route, the amount of miles travelled along the route, or the amount of carbon emissions emitted or saved compared to an alternative route). After accepting, the vehicle operator 100 may provide final confirmation to the VODB to book the route.

Once the VODB has booked the "Confirmed booking Request", it may send a notification of this to the operators 102, 104a, 104b, 106.

Even after the VODB has booked the "Confirmed booking Request", alterations to the booking request may still be made. For example, the VODB may receive updates from the operators 102, 104a, 104b, 106 or a NOTAM system 500 informing the VODB that the booked route can no longer be performed. For example, emergencies such as a fire, natural disaster, or the imposture of TFRs may mean that one or more of the operators 102, 104a, 104b, 106 can no longer fulfil the booked route. These entities may update the VODB informing it that the route can no longer be fulfilled. The VODB may then move the booking from "Confirmed booking Request" back to "Pre-booking request" or "Non-confirmed Request", or may cancel the request entirely. The VODB may send notification of this cancellation to the vehicle operator and other operators involved in the route, and optionally allow the operator to modify the proposed route plan to overcome these restrictions.

Modifying or cancelling the request may involve one of the location, route corridor, or vehicle operators sending modifying information relating to such a request to the VODB system. This modifying information may specify that the operator cannot fulfil the route, and request that the planned route be cancelled. Alternatively, modifying information may specify that the operator cannot fulfil the route but request modifications to the planned route that would allow the operator to fulfil the planned route. This may include altering the start or end times of the route, altering the route path, or other modifications.

Reasons for cancelling or modifying a request which may be included in the modifying information may include:
- Weather conditions no longer permit the route
- The vehicle operator no longer has a vehicle able to fulfil the route (e.g. due to vehicle breakdown)
- The prospective passenger no longer wishes to take the flight
- The location operators can no longer fulfil the route

The vehicle operator 100 may also submit changes to the planned route after booking. This may result in the booking moving from "Confirmed booking Request" back to "Pre-booking request", and further pre-booking requests being sent to the operators for acceptance or rejection.

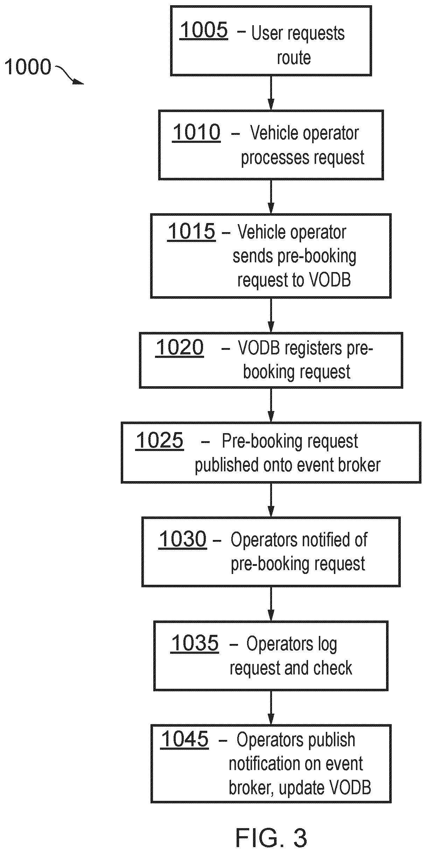

Figure 3 is a flow chart illustrating method steps 1000 which may be performed in the process of generating an approved vehicle travel route.

At step 1005, a user may request a route with a vehicle operator. For example, the user may be a prospective passenger and the vehicle operator may be an airline or eVTOL operator. The user may request the vehicle operator fulfil the users desired route by providing a vehicle to take them from a first location to a second location, for example between two vertiports A and B). The user may submit this request through an app, a website, email, via a blockchain or smart contract, or via any suitable communication means.

The user request may include information such as a origin and destination location (these may be broad geographic regions such as cities, or may be specific vertiports or airports), desired travel time, preferred route corridor(s) (for example, the user may request that the vehicle travel through a corridor with scenic views), preferred vehicle type (for example, the user may specify the mode of transportation such as a car, drone, eVTOL, or airplane, pick between a given "class" of vehicle such as economy, business, or first class, specify the number of passengers travelling or seats required) amongst other information.

At step 1010, the vehicle operator may process the user request to determine if the vehicle operator can fulfil the request. To do this, the vehicle operator receives the users request and performs checks (against either a database exclusively used by the vehicle operator, or the VODB) to see if the it has the necessary resources to fulfil the request.

The vehicle operator may have no vehicle available at the required time and inform the user it must cancel the request. Alternatively, the vehicle operator may not be able to fulfil the exact request, but may propose alternative suggestions to the user for approval. Foe example, the vehicle operator may propose a different time or vehicle type which the vehicle operator could fulfil.

At step 1015, once the vehicle operator and user have agreed to a request the vehicle operator can fulfil, the vehicle operator may send a pre-booking request to the VODB. This may be sent to the VODB directly, which advantageously allows the pre-booking request to be more easily logged and tracked. However, it is possible for the pre-booking request to be published on the event broker for the VODB to receive. The pre-booking request may contain some or all of the information provided in the user request. This pre-booking request may contain information related to the booking such as a trip number defined by the vehicle operator, the origin time / take off at the location / vertiport A, the arrival time of the location / vertiport B, and the route corridor corridor(s) that the vehicle will travel through.

Whilst the origin and destination locations may include vertiports, that being an area that supports take-off and landing operations of eVTOL aircraft, they are not limited to vertiports. Further examples of such locations may include:
- Transport Hubs
- Airports
- Docks or Harbours
- Heliports
- Truck Depot

At step 1020, upon receiving the pre-booking request the VODB may register the pre-booking request. This may involve logging the request on the VODB, as a "Pre-booking designation". This may be accessible and viewable by other operators, and thereby stop other vehicle operators from filing a separate booking request whilst the first booking request is being processed, to avoid a risk of resources becoming double booked. When logging the pre-booking request, the VODB may generate a unique user ID, which operators can exchange to confirm what pre-booking request they are exchanging data regarding. For example, the user ID may be provided to the vehicle operator, who may provide it when making changes to the pre-booking request to verify their identity.

At step 1025, the VODB publishes the pre-booking request onto the event broker 300. The VODB may interact with the event broker using an API.

At step 1030, operators such as the origin location operator 102, route corridor operators 104a, 104b, and destination location operator 106 are notified of the pre-booking request. These operators are in charge of the relevant origin location, destination location, and route corridors specified in the pre-booking request. Any number of route corridors may form part of the requested route, not merely the two 114a and 114b provided as an example herein. The pre-booking notification request may be sent to every operator responsible for the planned route at once. This has the advantage of allowing each operator to process the request at the same time, which can reduce the waiting time required for all the operators to approve of the route. Alternatively, the prebooking information may be sent to one operator at a time, with the prebooking request only being sent to the next operator when the previous operator has approved it. This has the advantage of potentially reducing the amount of data sent if one of the operators rejects the proposed route.

Additionally, a route corridor operator may be contacted multiple times - for example, the proposed flight path may pass through the same route corridor twice, and therefore require approval for the two separate passages.

At step 1035, the operators 102, 104a and b, and 106 log the request and process it to see if they can accept the request. For example, operator 102 may be a vertiport operator. Operator 102 may receive the pre-booking request and check whether it has the resources available to fulfil the route being requested. For example, the operator may check whether it has available runways / take off zones at the requested time suitable for the vehicle being proposed, whether it has ground crew available to load the vehicle before take off, or more. The operator may obtain this information regarding resources from either a local database (e.g. a database accessible only by the vertiport operator) or from the VODB. Similar processes may be performed by the operator 106. The origin location operator may access origin location resource information, the destination location operator may access destination location resource information, and the at least one route corridor operator may access route corridor resource information. This resource information allows the operators 102, 104a, 104b, 106 to determine whether they have the resources available to accommodate the planned route.

Additionally, the pre-booking request may be supplied to NOTAM operator 500. The NOTAM system may have the ability to approve / deny the pre-booked route. For example, operators 102, 104a and b, and 106 may have all the resources available to accommodate the planned route, but a dangerous weather system or other event noted by the NOTAM system may mean the route is no longer available. The NOTAM system may therefore send a notification to the VODB system to reject the route.

Alternatively, instead of the NOTAM operator being contacted directly, the destination or route corridor operators may access the information stored on the NOTAM system an used that in their determination of whether they can accept the pre-booked route.

At step 1045, one or more of the operators 102, 104a and b, and 106 publish notifications onto the event broker system to update the VODB. These notification may contain the user ID, and inform the VODB about whether the operator has accepted or rejected the route.

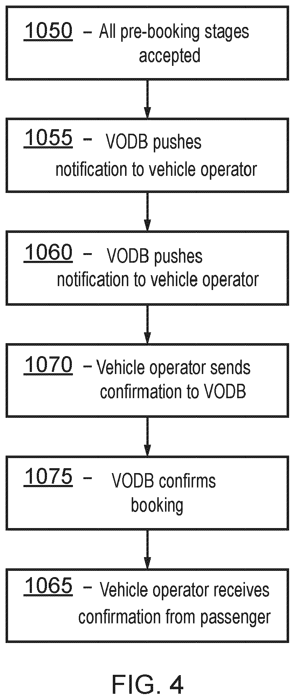

Figure 4 shows steps that may follow the method steps found in figure 3.

In step 1050, all the operators have sent notifications confirming to the VODB that they can accept the pre-booked route. These are stored with the pre-booking request on the VODB.

At step 1055, the VODB pushes a notification to the vehicle operator. The notification informs the vehicle operator that all of the operators 102, 104a and b, and 106 have provisionally accepted the route. Having received this notification, the vehicle operator may perform step 1070 and send confirmation to the VODB that the vehicle operator accepts the route.

Alternatively and optionally, the vehicle operator may perform step 1065 and send a notification to the user asking them to confirm they wish to book the final route. This notification may be send via email, through a smart phone app, or through any viable means of communication. This notification may also be sent with an associated price for the user to book the trip. The user may then need to accept the route and pay the price before the vehicle operator will proceed to book the flight.

At step 1075, the VODB receives the notification of acceptance by the vehicle operator. This notification may use the unique user ID to confirm the route. The VODB then moves the route booking from being classed as a "pre-booking request" to a "Confirmed booking". This event may trigger the VODB to publish a notification of this on the event broker informing the operators 102, 104a and b, and 106 that the route has been finally confirmed.

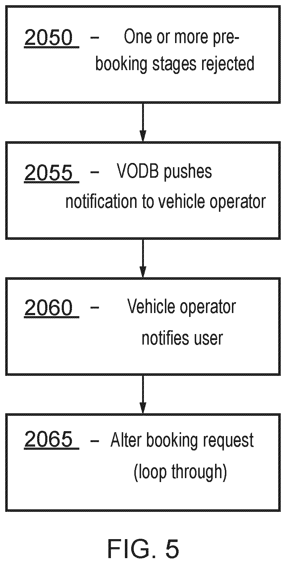

Figure 5 shows an alternative set of method steps that may follow step 1045 in the event one or more operators reject the proposed route.

At step 2050, one or more of the operators 102, 104a and b, and 106 may determine that they cannot accommodate the planned route (e.g. they do not have the resources available at the required time to accommodate the vehicle). As a result, for step 1045 the operators may publish a rejection notification on the event broker, which is passed to the VODB and logged.

The VODB may delete the pre-booking request at this stage, designate the request as "Rejected", or may simply maintain as "Pre-booked" until a later time.

At step 2055, the VODB pushes a notification to the vehicle operator informing them that the route cannot be completed.

In response, at step 2060 the vehicle operator notifies the user that their preferred route cannot be completed.

At step 2065, the user or vehicle operator may have the option to book a new alternative route, or to modify their existing booking request to create an allowable route. For example, operators 102 and 106 may have accepted the route (e.g. they have the resources to allow take-off and landing at the required times) but the operators 104a and b may not be able to accommodate the route. The flight operator may then modify the booking request to pass through different route corridors. In another example, one or both of the operators 102 and 106 may not have capacity, and the user may need to select a new location to take-off and/or land at.

The new alternative route may make use of the same operators 102, 104a, 104b, and 106 as the previous route, albeit with the route being taken at a different time which all these operators can accommodate. Alternatively, the route may occur at the same or a different time but with one or more of the original operators changed.

It will be understood that if a modification to the route is submitted, the VODB and event broker will need to perform steps as described above to obtain confirmation from all operators of the route in order to confirm booking of the route.

It will be understood that not all of the method steps outlined above are required in order for a route to be booked, nor do these step necessarily need to be performed in the order outlined above.

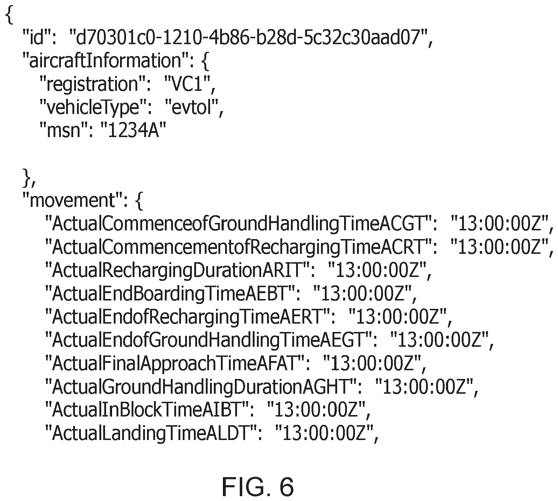

Figure 6 shows an example of code that may included in the pre-booking request and stored on the VODB or stored by an operator as confirmation the flight plan has been accepted and confirmed..

The request may be assigned a unique ID, to allow the request to be identified by the different operating entities. The unique ID may be in the form of a hash key or in the form of alphanumeric data.

The request may include information regarding the vehicle, for example including a registration number, a vehicle type, or a manufactured serial number (MSN).

The request may also include information such as the various timings the trip is expected to take. For example, landing times, ground handling times, charging times, and more as shown. These may be used when an operator tries to determine if it has the resources needed to accommodate the route at the necessary times.

It will be appreciated that the described systems or methods may be implemented on or using a computing device, such as a desktop computer, a laptop computer, a tablet computer, a personal digital assistant, a mobile telephone, a smartphone.

The device may comprise a computer processor running one or more server processes for communicating with client devices. The server processes comprise computer readable program instructions for carrying out the operations of the present invention. The computer readable program instructions may be or source code or object code written in or in any combination of suitable programming languages including procedural programming languages such as C, object orientated programming languages such as C#, C++, Java, scripting languages, assembly languages, machine code instructions, instruction-set-architecture (ISA) instructions, and state-setting data.

The wired or wireless communication networks described above may be public, private, wired or wireless network. The communications network may include one or more of a local area network (LAN), a wide area network (WAN), the Internet, a mobile telephony communication system, or a satellite communication system. The communications network may comprise any suitable infrastructure, including copper cables, optical cables or fibres, routers, firewalls, switches, gateway computers and edge servers.

The system described above may comprise a Graphical User Interface. Embodiments of the invention may include an on-screen graphical user interface. The user interface may be provided, for example, in the form of a widget embedded in a web site, as an application for a device, or on a dedicated landing web page. Computer readable program instructions for implementing the graphical user interface may be downloaded to the client device from a computer readable storage medium via a network, for example, the Internet, a local area network (LAN), a wide area network (WAN) and/or a wireless network. The instructions may be stored in a computer readable storage medium within the client device.

As will be appreciated by one of skill in the art, the invention described herein may be embodied in whole or in part as a method, a data processing system, or a computer program product including computer readable instructions. Accordingly, the invention may take the form of an entirely hardware embodiment or an embodiment combining software, hardware and any other suitable approach or apparatus.

The computer readable program instructions may be stored on a non-transitory, tangible computer readable medium. The computer readable storage medium may include one or more of an electronic storage device, a magnetic storage device, an optical storage device, an electromagnetic storage device, a semiconductor storage device, a portable computer disk, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk.

Exemplary embodiments of the invention may be implemented as a circuit board which may include a CPU, a bus, RAM, flash memory, one or more ports for operation of connected I/O apparatus such as printers, display, keypads, sensors and cameras, ROM, a communications sub-system such as a modem, and communications media.
The following clauses are provided:
1. A system for booking a planned route between an origin and a destination for an article, comprising:
   a processor configured to cause the system to:
      transmit prebooking information to an origin location operator, a destination location operator, and at least one route corridor operator, each operator being responsible for a portion of the planned route, and wherein the prebooking information comprises information relating to the planned route between the origin and the destination;
      receive a message from each of the origin location operator, the destination location operator, and the at least one route corridor operator, wherein each message from each operator confirms or rejects whether the corresponding operator is able to accommodate the portion of the planned route that the corresponding operator is responsible for; and
      if the message received from each operator is a confirmation that the corresponding operator is able to accommodate the portion of the planned route that the corresponding operator is responsible for, transmit a confirmation message to book the planned route to each of the origin location operator, the destination location operator, and the at least one route corridor operator.
2. The system of clause 1, wherein transmitting the prebooking information comprises transmitting:
   a request to take-off from a runway, helipad, or landing zone at the origin location;
   a request to land at a runway, helipad, or landing zone at the destination location;
   a request to travel through an airway; or
   when the article is vehicle, the particular mode of transport or vehicle type of the vehicle.
3. The system of any previous clause , wherein transmitting the prebooking information comprises transmitting:
   a departure time for the origin location;
   an arrival time for the destination location; or
   an arrival and departure time from at least one route corridor.
4. The system of any previous clause , wherein the system is configured to receive, from an article operator configured to control the movement of the article, a prebooking request comprising prebooking information for a planned route for the article.
5. The system of clause 4, wherein the system comprises a storage means, and the system is configured to store the prebooking request in the storage means.
6. The system of clause 5, wherein the processor assigns the prebooking request with a unique ID which is configured to be used in transactions with the system to identify the prebooking request.
7. The system of clause 6, wherein the unique ID comprises alphanumeric data.
8. The system of any one of clauses 5 to 7, wherein the system is further configured to:
   receive modifying information, the modifying information relating to modifying or cancelling the planned route from one of the operators or a user after the route has been confirmed;
   store the modifying information on the storage system; and
   transmit a message to the remaining operators or user to inform the remaining operators that the route has been modified or cancelled.
9. The system of any previous clause , wherein the origin location operator, upon receiving the prebooking information, is configured to determine whether the origin location has the resources available required to accommodate the planned route using origin location resource information accessed from a storage system.
10. The system of any previous clause , wherein the destination location operator, upon receiving the prebooking information, is configured to determine whether the destination location has the resources available at the destination location required to accommodate the planned route using destination location resource information accessed from a storage system.
11. The system of clause 9 or 10, wherein when the system is configured to determine if the operator can accommodate the planned route, in which the system is configured to determine any one or more of whether:
   the origin or destination location has an available runway or landing pad;
   the origin or destination location has sufficient ground crew to unload the vehicle; and
   where the article is a vehicle, the origin or destination location has an available terminal for vehicle passengers to disembark.
12. The system of any previous clause , wherein the at least one route corridor operator, upon receiving the prebooking information, determines whether it has the resources available at the route corridor required to accommodate the planned route using route corridor resource information accessed from a storage system.
13. The system of clause 12, wherein determining if the operator can accommodate the planned route comprises checking one or more of whether:
   the route corridor has capacity to accommodate the planned route;
   the vehicle type is of a class of vehicle allowed to pass through the route corridor;
   a vehicle cargo is of a class of cargo allowed to pass through the route corridor; and
   the weather conditions make the route corridor unsuitable.
14. The system of any of clauses 9 to 13, wherein when the system is configured to determine whether any one of the origin location operator, the destination location operator, and the at least one route corridor operator can accommodate the planned route, the operator is configured to use the system to access information from a single storage system shared between at least some of the operators and containing information relating to at least two of the origin location, destination location, and route corridor.
15. The system of clause 14, wherein the storage system is configured to allow any one of the origin location operator, the destination location operator, and the at least one route corridor operator to access the system using an Application Programming Interface, API.
16. The system of any previous clause , wherein in response to all of the origin location operator, the destination location operator, and the at least one route corridor operator confirming the prebooked route, the system is configured to send a confirmation notification to an article operator configured to control the movement of the article informing the article operator that the route is available.
17. The system of clause 16, wherein in response to the system sending a confirmation notification to the article operator, the article operator is configured to send a notification that the route is available to the user.
18. The system of clause 17, wherein the article operator is configured to send the confirmation notification to the user for the article to travel along the route, preferably comprising a value associated with the route.
19. The system of any previous clause , wherein the system is configured to receive the prebooking information from a or the user via a mobile application.
20. The system of any previous clause , wherein in response to the system receiving confirmation to book the flight, the system is configured to communicate with the storage device to move the flight path from prebooked to booked status.
21. The system of any previous clause , wherein the processor is further configured to cause the system to:
   receive a message from the origin location operator, the destination location operator, and the at least one route corridor operator confirming the planned route has been booked.
22. The system of any previous clause , wherein the processor is configured to receive the pre-booking information from a storage device, and wherein preferably the storage device is configured to receive the pre-booking information from an or the article operator.
23. The system of any of clauses 1 to 21, wherein the processor is configured to receive the pre-booking information from the article operator.
24. The system of clause 23, wherein a or the user is configured to send the pre-booking information to the article operator.
25. The system of any previous clause , wherein if one or more of the origin location operator, the destination location operator, and the at least one route corridor operator rejects the corresponding operator's portion of the planned route, the system is configured to:
   transmit an alternative prebooking information to an alternative origin location operator, an alternative destination location operator, and at least one alternative route corridor operator, each operator being responsible for a portion of the planned route, and wherein the alternative prebooking information comprises information relating to the alternative planned route between the origin and the destination;
   receive a message from each of the alternative origin location operator, the alternative destination location operator, and the at least one alternative route corridor operator, wherein each message from an operator confirms or rejects whether the corresponding operator is able to accommodate the portion of the planned route that the corresponding operator is responsible for;
   if the message received from each alternative operator is a confirmation that the corresponding operator is able to accommodate the portion of the alternative planned route that the corresponding operator is responsible for, transmit a second confirmation message to book the alternative planned route, wherein the second confirmation message is transmitted to the alternative origin location operator, the alternative destination location operator, and the at least one alternative route corridor operator.
26. The system of clause 25, wherein the system is configured to:
   transmit a request for the alternative route to the article operator; and
   receive the alternative route from the article operator, comprising alternative prebooking information.
27. The system of any clause 25 to 26, wherein the system is configured to transmit the alternative prebooking information to the alternative origin location operator, the alternative destination location operator, and the at least one alternative route corridor operator, at least one of which differs from the origin location operator, the destination location operator, and the at least one route corridor operator.
28. The system of any clause 25 to 26, wherein the system is configured to transmit the alternative prebooking information to the alternative origin location operator, the alternative destination location operator, and the at least one alternative route corridor operator, none of which differ from the origin location operator, the destination location operator, and the at least one route corridor operator, wherein the planned route has a different initial departure time to the alternative planned route.
29. A computer device, comprising:
   a storage device for storing a data set comprising a plurality of data elements;
   a processor configured to cause the device to:
      receive data stored within a plurality of storage systems, each storage system comprising at least one data element of the plurality of data elements, each storage system configured to store information comprising any one or more of an origin location, a destination location, or at least one route corridor; and
      update the storage device to store further data defining the availability of the origin location, the destination location, and the at least one route corridor.
30. The computer device of clause 29, wherein the computer device is configured to receive information to store on the storage device from a user via an Application Programming Interface, API.
31. The computer device of any clause 29 to 30, wherein the device is configured to receive, from an article operator configured to control the movement of an article, a prebooking request comprising prebooking information for a planned route for the article.
32. The computer device of clause 31, wherein the device is configured to store the prebooking request in the storage device.
33. The computer device of clause 32, wherein the processor is configured to assign the prebooking request with a unique ID which is configured to be used in transactions with the system to identify the prebooking request.
34. The computer device of clause 33, wherein the unique ID comprises alphanumeric data.
35. The computer device of any clause 29 to 34, wherein the device is configured to:
   receive modifying information, the modifying information relating to modifying or cancelling a planned route from an operator of a set of operators or a user after the route has been confirmed;
   store the modifying information on the storage device;
   transmit a message to the remaining operators of the set of operators or user to inform the remaining operators of the set of operators that the route has been modified or cancelled.
36. The computer device of any clause 29 to 35, wherein the device is configured to allow an operator of a set of operators to access the data from the storage device.
37. The computer device of any clause 29 to 36, wherein the storage device is configured to store data comprising:
   if the origin or destination location has an available runway or landing pad;
   if the origin or destination location has sufficient ground crew to unload the vehicle; or
   if the origin or destination location has an available terminal for vehicle passengers to disembark;
   if the route corridor has capacity to accommodate a or the planned route;
   if a class of vehicle is allowed to pass through the route corridor;
   if a class of cargo allowed to pass through the route corridor; and
   if the weather conditions make the route corridor unsuitable.
38. A computer device, comprising:
   a storage device for storing a first data set comprising a plurality of data elements, the plurality of data elements defining the availability of an origin location, a destination location, and at least one route corridor;
   a processor configured to cause the device to:
      receive a second data set from at least one of an operator of the origin location, the destination location, or at least one route corridor, wherein the second data set comprises updated information comprising the resources available at the origin location, the destination location, or at least one route corridor to accommodate an article;
      store the second data set within the storage device; and
      transmit the second data set to an article operator which is configured to control the movement of the article in response to receiving a request from a user book a planned route.
39. The device of clause 38, wherein the device is configured to transmit the second data set to an operator configured to control the movement of a vehicle, package, luggage, baggage, parcel, or letter.
40. The device of any clause 39 to 39, wherein the operator is an operator of a vehicle, and the vehicle is a fixed wing aircraft, non fixed wing aircraft, or vertical take-off and landing aircraft.
41. The device of any clause 38 to 40, wherein the second data set comprises alphanumeric data.
42. The device of any clause 38 to 41, wherein the operator is an operator of a vehicle, and the second data set comprises any one or more of:
   information regarding whether the origin or destination location are locations able to support the landing and take-off of vertical take-off and landing, VTOL, aircraft;
   information regarding whether the origin or destination location has an available runway or landing pad;
   information regarding whether the origin or destination location has sufficient ground crew to unload the vehicle;
   information regarding whether the origin or destination location has an available terminal for vehicle passengers to disembark at;
   information regarding whether the route corridor has capacity to accommodate a planned route;
   information regarding whether the route corridor has restrictions on which aircraft are allowed to fly through the route corridor;
   information regarding whether a type or class of vehicle is allowed to pass through the route corridor;
   information regarding whether a type or class of vehicle cargo is allowed to pass through the route corridor;
   information regarding weather conditions; and
   information regarding what vehicle journeys are already scheduled for a given time.
43. The device of any clauses 38 to 42, wherein the second data set is configured to be received from at least one of an origin airport operator, a destination airport operator, or at least one airway operator.
44. A method for booking a planned route between two locations, the method comprising:
   transmitting prebooking information to an origin location operator, a destination location operator, and at least one route corridor operator, each operator being responsible for a portion of the planned route, and wherein the prebooking information comprises information relating to the planned route between the origin and the destination;
   receiving a message from each of the origin location operator, the destination location operator, and the at least one route corridor operator, wherein each message from each operator confirms or rejects whether the corresponding operator is able to accommodate the portion of the planned route that the corresponding operator is responsible for; and
   if the message received from each operator is a confirmation that the corresponding operator is able to accommodate the portion of the planned route that the corresponding operator is responsible for, transmitting a confirmation message to book the planned route, wherein the confirmation message is transmitted to the origin location operator, the destination location operator, and the at least one route corridor operator.
45. The method of clause 44, wherein transmitting the prebooking information comprises transmitting:
   a request to take-off from a runway, helipad, or landing zone at the origin location;
   a request to land at a runway, helipad, or landing zone at the destination location;
   a request to travel through an airway; or
   when the article is vehicle, the particular mode of transport or vehicle type of the vehicle.
46. The method of any of clauses 44 to 45, wherein transmitting the prebooking information comprises transmitting:
   a departure time for the origin location;
   an arrival time for the destination location; or
   an arrival and departure time from at least one route corridor.
47. The method of any of clauses 44 to 46, further comprising receiving, from an article operator configured to control the movement of the article, a prebooking request comprising prebooking information for a planned route for the article.
48. The method of clause 47, further comprising storing the prebooking request in a storage means.
49. The method of clause 48, further comprising assigning the prebooking request with a unique ID which is configured to be used in transactions to identify the prebooking request.
50. The method of clause 49, wherein the unique ID comprises alphanumeric data.
51. The method of any of clauses 48 to 50, further comprising:
   receiving modifying information, the modifying information relating to modifying or cancelling the planned route from one of the operators or a user after the route has been confirmed;
   storing the modifying information on the storage system;
   transmitting a message to the remaining operators or user to inform the remaining operators that the route has been modified or cancelled.
52. The method of any of clauses 44 to 51, wherein the origin location operator, upon receiving the prebooking information, determines whether the origin location has the resources available required to accommodate the planned route using origin location resource information accessed from a storage system.
53. The method of any of clauses 44 to 52, wherein the destination location operator, upon receiving the prebooking information, determines whether the destination location has the resources available at the destination location required to accommodate the planned route using destination location resource information accessed from a storage system.
54. The method of any of clauses 52 to 53, further comprising determining any one or more of whether:
   the origin or destination location has an available runway or landing pad;
   the origin or destination location has sufficient ground crew to unload the vehicle; and
   where the article is a vehicle, the origin or destination location has an available terminal for vehicle passengers to disembark.
55. The method of any of clauses 44 to 54, wherein the at least one route corridor operator, upon receiving the prebooking information, determines whether it has the resources available at the route corridor required to accommodate the planned route using route corridor resource information accessed from a storage system.
56. The method of clause 55, further comprising determining any one or more of whether:
   the route corridor has capacity to accommodate the planned route;
   the vehicle type is of a class of vehicle allowed to pass through the route corridor;
   a vehicle cargo is of a class of cargo allowed to pass through the route corridor; and
   the weather conditions make the route corridor unsuitable.
57. The method of any of clauses 52 to 56, wherein when determining whether any one of the origin location operator, the destination location operator, and the at least one route corridor operator can accommodate the planned route, the operator uses the system to access information from a single storage system shared between at least some of the operators and containing information relating to at least two of the origin location, destination location, and route corridor.
58. The method of clause 57, wherein the storage system allows any one of the origin location operator, the destination location operator, and the at least one route corridor operator to access the system using an Application Programming Interface, API.
59. The method of any of clauses 44 to 59, wherein in response to all of the origin location operator, the destination location operator, and the at least one route corridor operator confirming the prebooked route, sending a confirmation notification to an article operator configured to control the movement of the article informing the article operator that the route is available.
60. The method of clause 59, wherein in response to the system sending a confirmation notification to the article operator, the article operator sends a notification that the route is available to the user.
61. The method of clause 60, wherein the article operator sends the confirmation notification to the user for the article to travel along the route, preferably comprising a value associated with the route.
62. The method of any of clauses 44 to 61, further comprising receiving the prebooking information from a or the user via a mobile application.
63. The method of any of clauses 44 to 62, wherein in response to receiving confirmation to book the flight, communicating with the storage device to move the flight path from prebooked to booked status.
64. The method of any of clauses 44 to 63, further comprising receiving a message from the origin location operator, the destination location operator, and the at least one route corridor operator confirming the planned route has been booked.
65. The method of any of clauses 44 to 64, comprising receiving the pre-booking information from a storage device.
66. The method of any of clauses 44 to 64, comprising receiving the pre-booking information from the article operator.
67. The method of clause 66, wherein a or the user sends the pre-booking information to the article operator.
68. The method of any of clauses 44 to 67, wherein if one or more of the origin location operator, the destination location operator, and the at least one route corridor operator rejects the corresponding operator's portion of the planned route, the method further comprises:
   transmitting an alternative prebooking information to an alternative origin location operator, an alternative destination location operator, and at least one alternative route corridor operator, each operator being responsible for a portion of the planned route, and wherein the alternative prebooking information comprises information relating to the alternative planned route between the origin and the destination;
   receiving a message from each of the alternative origin location operator, the alternative destination location operator, and the at least one alternative route corridor operator, wherein each message from an operator confirms or rejects whether the corresponding operator is able to accommodate the portion of the planned route that the corresponding operator is responsible for;
   if the message received from each alternative operator is a confirmation that the corresponding operator is able to accommodate the portion of the alternative planned route that the corresponding operator is responsible for, transmitting a second confirmation message to book the alternative planned route, wherein the second confirmation message is transmitted to the alternative origin location operator, the alternative destination location operator, and the at least one alternative route corridor operator.
69. The method of clause 68, further comprising:
   transmitting a request for the alternative route to the article operator; and
   receiving the alternative route from the article operator, comprising alternative prebooking information.
70. The method of any clause 68 to 69, further comprising transmitting the alternative prebooking information to the alternative origin location operator, the alternative destination location operator, and the at least one alternative route corridor operator, at least one of which differs from the origin location operator, the destination location operator, and the at least one route corridor operator.
71. The method of any clause 68 to 69, further comprising transmitting the alternative prebooking information to the alternative origin location operator, the alternative destination location operator, and the at least one alternative route corridor operator, none of which differ from the origin location operator, the destination location operator, and the at least one route corridor operator, wherein the planned route has a different initial departure time to the alternative planned route.

## Claims

1. A system for booking a planned route between an origin and a destination for an article, comprising:
a processor configured to cause the system to:
transmit prebooking information to an origin location operator, a destination location operator, and at least one route corridor operator, each operator being responsible for a portion of the planned route, and wherein the prebooking information comprises information relating to the planned route between the origin and the destination;
receive a message from each of the origin location operator, the destination location operator, and the at least one route corridor operator, wherein each message from each operator confirms or rejects whether the corresponding operator is able to accommodate the portion of the planned route that the corresponding operator is responsible for; and
if the message received from each operator is a confirmation that the corresponding operator is able to accommodate the portion of the planned route that the corresponding operator is responsible for, transmit a confirmation message to book the planned route to each of the origin location operator, the destination location operator, and the at least one route corridor operator.

2. The system of claim 1, wherein transmitting the prebooking information comprises transmitting:
a request to take-off from a runway, helipad, or landing zone at the origin location;
a request to land at a runway, helipad, or landing zone at the destination location;
a request to travel through an airway; or
when the article is vehicle, the particular mode of transport or vehicle type of the vehicle.

3. The system of any previous claim, wherein transmitting the prebooking information comprises transmitting:
a departure time for the origin location;
an arrival time for the destination location; or
an arrival and departure time from at least one route corridor.

4. The system of any previous claim, wherein the system is configured to receive, from an article operator configured to control the movement of the article, a prebooking request comprising prebooking information for a planned route for the article, preferably wherein the system comprises a storage means and the system is configured to store the prebooking request in the storage means.

5. The system of claim 4 when including the preferable features, wherein the system is further configured to:
receive modifying information, the modifying information relating to modifying or cancelling the planned route from one of the operators or a user after the route has been confirmed;
store the modifying information on the storage system; and
transmit a message to the remaining operators or user to inform the remaining operators that the route has been modified or cancelled.

6. The system of any previous claim, wherein the origin location operator or destination location operator, upon receiving the prebooking information, is configured to determine whether the corresponding origin location or destination location has the resources available required to accommodate the planned route using corresponding origin location resource information or destination location resource information accessed from a storage system, and preferably wherein when the system is configured to determine if the operator can accommodate the planned route, in which the system is configured to determine any one or more of whether:
the origin or destination location has an available runway or landing pad;
the origin or destination location has sufficient ground crew to unload the vehicle; and
where the article is a vehicle, the origin or destination location has an available terminal for vehicle passengers to disembark.

7. The system of any previous claim, wherein the at least one route corridor operator, upon receiving the prebooking information, determines whether it has the resources available at the route corridor required to accommodate the planned route using route corridor resource information accessed from a storage system, preferably wherein determining if the operator can accommodate the planned route comprises checking one or more of whether:
the route corridor has capacity to accommodate the planned route;
the vehicle type is of a class of vehicle allowed to pass through the route corridor;
a vehicle cargo is of a class of cargo allowed to pass through the route corridor; and
the weather conditions make the route corridor unsuitable.

8. The system of claim 6 or claim 7 when dependent upon claim 6, wherein when the system is configured to determine whether any one of the origin location operator, the destination location operator, and the at least one route corridor operator can accommodate the planned route, the operator is configured to use the system to access information from a single storage system shared between at least some of the operators and containing information relating to at least two of the origin location, destination location, and route corridor.

9. The system of any previous claim, wherein:
in response to all of the origin location operator, the destination location operator, and the at least one route corridor operator confirming the prebooked route, the system is configured to send a confirmation notification to an article operator configured to control the movement of the article informing the article operator that the route is available, preferably wherein in response to the system sending a confirmation notification to the article operator, the article operator is configured to send a notification that the route is available to the user; and / or
in response to the system receiving confirmation to book the flight, the system is configured to communicate with the storage device to move the flight path from prebooked to booked status.

10. The system of any previous claim, wherein:
the processor is further configured to cause the system to:receive a message from the origin location operator, the destination location operator, and the at least one route corridor operator confirming the planned route has been booked.

11. The system of any previous claim, wherein the processor is configured to receive the pre-booking information from a storage device, and wherein preferably the storage device is configured to receive the pre-booking information from an or the article operator.

12. The system of any of claims 1 to 10, wherein the processor is configured to receive the pre-booking information from the article operator, preferably wherein a or the user is configured to send the pre-booking information to the article operator.

13. The system of any previous claim, wherein if one or more of the origin location operator, the destination location operator, and the at least one route corridor operator rejects the corresponding operator's portion of the planned route, the system is configured to:
transmit an alternative prebooking information to an alternative origin location operator, an alternative destination location operator, and at least one alternative route corridor operator, each operator being responsible for a portion of the planned route, and wherein the alternative prebooking information comprises information relating to the alternative planned route between the origin and the destination;
receive a message from each of the alternative origin location operator, the alternative destination location operator, and the at least one alternative route corridor operator, wherein each message from an operator confirms or rejects whether the corresponding operator is able to accommodate the portion of the planned route that the corresponding operator is responsible for;
if the message received from each alternative operator is a confirmation that the corresponding operator is able to accommodate the portion of the alternative planned route that the corresponding operator is responsible for, transmit a second confirmation message to book the alternative planned route, wherein the second confirmation message is transmitted to the alternative origin location operator, the alternative destination location operator, and the at least one alternative route corridor operator; and wherein preferably the system is configured to:
transmit a request for the alternative route to the article operator; and
receive the alternative route from the article operator, comprising alternative prebooking information.

14. The system of claim 13 wherein the system is configured to transmit the alternative prebooking information to the alternative origin location operator, the alternative destination location operator, and the at least one alternative route corridor operator, wherein:
at least one of which differs from the origin location operator, the destination location operator, and the at least one route corridor operator; or
none of which differ from the origin location operator, the destination location operator, and the at least one route corridor operator, wherein the planned route has a different initial departure time to the alternative planned route.

15. A computer device, comprising:
a storage device for storing a data set comprising a plurality of data elements;
a processor configured to cause the device to:
receive data stored within a plurality of storage systems, each storage system comprising at least one data element of the plurality of data elements, each storage system configured to store information comprising any one or more of an origin location, a destination location, or at least one route corridor; and
update the storage device to store further data defining the availability of the origin location, the destination location, and the at least one route corridor.

16. The computer device of claim 15, wherein the device is configured to receive, from an article operator configured to control the movement of an article, a prebooking request comprising prebooking information for a planned route for the article.

17. The computer device of any claim 15 to 16, wherein the device is configured to:
receive modifying information, the modifying information relating to modifying or cancelling a planned route from an operator of a set of operators or a user after the route has been confirmed;
store the modifying information on the storage device;
transmit a message to the remaining operators of the set of operators or user to inform the remaining operators of the set of operators that the route has been modified or cancelled.

18. The computer device of any claim 15 to 17, wherein the storage device is configured to store data comprising:
if the origin or destination location has an available runway or landing pad;
if the origin or destination location has sufficient ground crew to unload the vehicle; or
if the origin or destination location has an available terminal for vehicle passengers to disembark;
if the route corridor has capacity to accommodate a or the planned route;
if a class of vehicle is allowed to pass through the route corridor;
if a class of cargo allowed to pass through the route corridor; and
if the weather conditions make the route corridor unsuitable.

19. A computer device, comprising:
a storage device for storing a first data set comprising a plurality of data elements, the plurality of data elements defining the availability of an origin location, a destination location, and at least one route corridor;
a processor configured to cause the device to:
receive a second data set from at least one of an operator of the origin location, the destination location, or at least one route corridor, wherein the second data set comprises updated information comprising the resources available at the origin location, the destination location, or at least one route corridor to accommodate an article;
store the second data set within the storage device; and
transmit the second data set to an article operator which is configured to control the movement of the article in response to receiving a request from a user book a planned route.

20. A method for booking a planned route between two locations, the method comprising:
transmitting prebooking information to an origin location operator, a destination location operator, and at least one route corridor operator, each operator being responsible for a portion of the planned route, and wherein the prebooking information comprises information relating to the planned route between the origin and the destination;
receiving a message from each of the origin location operator, the destination location operator, and the at least one route corridor operator, wherein each message from each operator confirms or rejects whether the corresponding operator is able to accommodate the portion of the planned route that the corresponding operator is responsible for; and
if the message received from each operator is a confirmation that the corresponding operator is able to accommodate the portion of the planned route that the corresponding operator is responsible for, transmitting a confirmation message to book the planned route, wherein the confirmation message is transmitted to the origin location operator, the destination location operator, and the at least one route corridor operator.
